# EUROPEAN PATENT SPECIFICATION

(11) **EP 4 423 392 B1**
(45) Date of publication and mention of the grant of the patent: **19.11.2025**
(21) Application number: 22823539.6
(22) Date of filing: 01.12.2022
(51) Int. Cl.: F03D 13/10, E04H 9/02, F03D 13/20, F03D 13/40

(54) **DAMPING DEVICE**
DÄMPFUNGSVORRICHTUNG
DISPOSITIF AMORTISSEUR

(30) Priority: 10.12.2021 EP 21213786
(43) Date of publication of application: 04.09.2024
(73) Proprietor: Siemens Gamesa Renewable Energy A/S, 7330 Brande (DK)
(72) Inventor: HANSEN, John, 7800 Skive (DK); KAARSHOLM, Soeren Majdal, 2200 Copenhagen N (DK)
(74) Representative: SGRE-Association
(86) International application number: PCT/EP2022/084019
(87) International publication number: WO 2023/104623

(56) References cited:
- EP-A1- 3 889 457
- WO-A1-2019/042516
- WO-A1-2020/020980
- DE-A1- 102015 000 787

## Description

### FIELD OF THE INVENTION

The present invention relates to a damping device configured to be mountable on an upper opening of a tower and a tower comprising such damping device. It further relates to a method of providing a damping device and a method of displacing a tower with a lifting device.

### BACKGROUND

Due to the rising demand for renewable energy sources, the number of installed renewable energy sources is continuously increasing. However, in the case of wind turbines, especially offshore wind turbines, the installation of such a system is a technically complicated process. An offshore wind turbine tower may have a height of 80-100 m and above. The tower is pre-assembled from smaller tower segments that are attached to each other. The pre-assembled tower is then temporarily stored in a vertical or upright orientation. Next, it is loaded onto an installation vessel to be transported to the offshore installation site. Other elements of the wind turbine, e.g. the nacelle or the rotor, are mounted at the installation site. Due to the height of the tower and its geometric design being basically a long hollow cylinder, the tower is exposed to potentially harmful vibrations induced by aerodynamic effects. At least a part of the aerodynamic effects is due to environmental influences (e.g. wind) acting on the tower during the vertical storage and transport of the tower, e.g. vortex-induced vibrations. Aerodynamic effects may cause vibrations which may mechanically damage the tower. The document EP 3 889 457 A1 is related to a temporary damping assembly that is mounted on a pre-assembled tower. The approach shown in the document EP 3 889 457 A1 considers the reduction of vortex-induced vibrations. Following the approach of this document, vibrations that are not vortex-induced may still act on the tower during the storage and/or transport of the tower. Moreover, the disclosed approach requires a rather high number of lifting operations when the tower is to be repositioned or displaced, e.g. when the tower is lifted onto or from the installation vessel. A rather high number of lifting operations however results in long installation durations and, hence, leads to a high monetary effort that is required for the installation of the tower.

In the document EP 3 889 457 A1, a displacement of the tower requires priorly to mount or dismount the damping assembly. During the resulting short periods during which the tower is not equipped with the damper assembly, the tower may then be exposed to the harmful vibrations and, thus, a risk of mechanic failure remains. Further, in an arrangement of a group of such pre-assembled towers, in which the towers are positioned closely to each other, aerodynamic interactions between the closely positioned towers may occur.

The document WO 2019/042516 A1 relates to a wind turbine tower comprising a tower vibration damper with a tuned mass damper and one or more impact damping units. The tuned mass damper comprises a pendulum structure in a chamber and the impact damping units are positioned between the pendulum structure and the outer boundary of the chamber such that the pendulum structure may collide with the boundary via the impact damping units.

The document DE 10 2015 000787 A1 relates to a load handling device for a tower or tower section of a wind turbine and a method of erecting a wind turbine using the load handling device.

### SUMMARY

Accordingly, there is the need to mitigate at least some of the drawbacks mentioned above and to provide an improved way of storing and/or transporting an upright tower.

This need is met by the features of the independent claims. The dependent claims describe embodiments of the invention.

According to an embodiment of the invention, a damping device configured to be mountable on an upper opening of a tower and configured to provide vibration damping during vertical storage and/or vertical transport of the tower is provided. The damping device comprises a liquid damper comprising a single liquid tank, a mounting interface configured to mount the liquid damper on the upper opening of the tower. The mounting interface comprises one or more load transfer elements configured to transfer vibrations between the tower and the liquid damper. The liquid damper is configured to provide the vibration damping at predetermined frequencies tunable by one or more damping parameters of the liquid damper. The one or more damping parameters are configured such that the liquid damper damps vibrations at least at a first frequency and at a second frequency, the second frequency being different from the first frequency.

This is advantageous since such damping device may allow damping of potentially harmful vibrations of the tower that are related to different frequencies or frequency regions and may be induced in the tower due to different aerodynamic effects. The damping device allows hence a wide scope vibration protection. For example, harmful vibrations of the tower like vortex induced vibrations that are related to rather lower frequency vibrations may be adequately damped just as harmful vibrations like interference galloping induced vibrations that are related to rather high frequency vibrations. Hence, the tower is protected from damage from vibrations over a wide scope of frequencies. Accordingly, the damping device may render the erection of a tower, e.g. an offshore wind turbine tower, safer and less risky. Further, it may facilitate the erection process. Since the liquid damper comprises only a single liquid tank that is tuned so as to damp a plurality of frequencies, the effort of manufacturing and maintaining the damping device is kept to a minimum. Moreover, a damping device with only a single liquid tank may have a reduced size and weight and, thus, may facilitate the handling of the damping device, e.g. facilitate the handling by means of a lifting device, e.g. a crane, or a respective gripping means.

The vibrations may be damped such that the vibrations are compensated at all or at least reduced to such a level according to which the tower is protected from damage from the vibrations.

The tower may be a tower of a wind turbine. In particular, the wind turbine tower may be a pre-assembled tower and/or the tower of an offshore wind turbine.

The tower of a wind turbine generally has the form of a narrow and long cone with an essentially circular cross-section. The widest part of the tower may be at its base.

The axial direction of the damping device may be oriented in vertical direction.

It should be clear that herein described aspects, embodiments and examples that are described with respect to a tower may correspondingly apply to a wind turbine tower, and particularly to an offshore wind turbine tower.

The damping device may be mountable or installable to the upper opening of the tower using any type of mounting interface. The damping device may for example be bolted to the tower, and/or clamped into an interior of the tower by means of the load transfer elements.

The liquid damper may be a (tuned) sloshing damper, a (tuned) liquid column damper or a (tuned) pendulum damper with viscous liquid.

The damping device may be a temporary damping device. The temporary damping device may be mounted to the tower during transport and/or storage of the tower.

According to an embodiment, the vibrations at the first frequency correspond to vortex induced vibrations of the tower and/or the vibrations at the second frequency correspond to interference galloping induced vibrations.

Tuning the damping device in such a way, it may reduce the risk of damage of the tower. Interference galloping is a phenomenon that occurs when at least two towers are closely positioned to each other. Using the damping device may now allow to densely arrange a plurality of towers on an arrangement site without a risk of damage of the towers. For example, it may allow to densely arrange wind turbine towers on an installation vessel. Consequently, more towers may be stored/transported in a limited space. That renders the storage and/or transport of the towers more efficient.

It should be clear that the first and second frequency may correspond to vibrations that are preferably due to other aerodynamic effects. It may also be possible that the liquid damper is configured to provide the vibration damping additionally at further frequencies, e.g. at a third or even at a fourth frequency. Such liquid damper may further reduce the risk of damaging the tower during storage and/or transport.

In an embodiment, the one or more damping parameters are tuned such that the damping device is configured to provide the vibration damping at frequencies in a frequency range around a third frequency, wherein the frequency range comprises both the first frequency and the second frequency.

In an embodiment, the one or more damping parameters are tuned such that the damping device is configured to damp vibrations at the third frequency being arranged between the first frequency and the second frequency.

In an embodiment, the one or more damping parameters are tuned such that a first magnitude of damping at the first frequency is above a first predetermined threshold and/or be a second magnitude of damping at the second frequency is above a second predetermined threshold.

The first and second magnitude of damping may be great enough to damp the vibrations at least at the first frequency and at the second frequency such that the tower is protected from damage, and in particular from damage related to vortex induced vibrations and/or interference galloping induced vibrations.

In other words, the damping device is configured such to cover a vibration damping over a frequency range comprising the first frequency and the second frequency, wherein the vibration damping is effective enough at the first frequency and second frequency to protect the tower from damage or to avoid damage of the tower due to said vibrations at said frequencies.

As mentioned, the first and the second frequencies may differ by each other. The difference between the frequencies may for example depend on a tower design and/or a wind speed. Accordingly, the difference may vary depending on operation circumstances. However, just to give an example, the first and the second frequencies may have a distance of (differ by) at least 20 percent, 40 percent, 60 percent or even 80 percent of the second frequency.

Such tuning of the damping device to the third frequency as a compromise between the first frequency and the second frequency allows the simple design of the damping device using a single liquid tank. As a result the damping device may be smaller dimensioned and may be mounted such to be arranged inside the tower. Still, a protection of the tower from vibrations over a wide frequency scope may be guaranteed.

According to an embodiment, the damping parameters comprise at least one of a geometric shape of the liquid tank, a size of the liquid tank, a type of a liquid in the liquid tank, a volume of the liquid in the liquid tank and a weight of the liquid in the liquid tank.

The damping device may be tuned by the damping parameters to adequately damp - i.e. damp such that the tower is protected from damage - vibrations at the predetermined frequencies. A modification of the damping parameters may result in a changed behavior of the dynamics of the liquid in the tank and, hence, in a changed dynamic of the dissipation of the vibration energy. The vibration energy is for example dissipated due to the flow of the liquid in the tank, e.g. due to frictional losses between the inner wall of the tank and the liquid. The geometric shape of the liquid tank may comprise a specific volume or body of the tank and/or specific structural elements, e.g. ribs, on the inner side of the tank. The type of the liquid may be configured to be non-freezing during an operation of the damping device. The type of the liquid may comprise a specific density, e.g. in a range between 1.1 and 2.5 kilogram/liter, and/or a specific viscosity. The volume of the liquid in the liquid tank may partially fill a total inner volume of the liquid tank, e.g. the liquid may fill the inner volume at least up to 50 percent, 60 percent, 70 percent, 80 percent, or even 90 percent. Preferably, the volume in the tank is between 3500 liters and 4500 liters.

According to an embodiment, the liquid tank is a volume comprising a vertical through hole. The volume comprises an inner wall enclosing the through hole and an outer wall enclosing the inner wall. The volume is defined between the inner wall and the outer wall. Preferably, at least one of the inner wall and the outer wall is circular or cylindrical.

The liquid tank may (essentially) be shaped as a ring or a hollow cylinder. The axial direction of the ring or the hollow cylinder may be oriented in vertical direction.

An outer dimension of the liquid tank may be configured such that the liquid tank is arrangeable inside the upper opening of the tower. Accordingly, the outer dimension of the liquid tank may be smaller than an inner dimension of the upper opening of the tower.

The outer dimension of the liquid tank may comprise an outer diameter of at least 2.0 meters to 3.0 meters and/or may comprise a height of at least 1.5 meters to 2.0 meters. The liquid tank may further comprise a through hole comprising a diameter of at least 0.8 meters to 1.2 meters.

Besides adequate damping, such geometric shape of the liquid tank may allow hindering any collision with objects that are positioned inside the tower in a region under the through hole of the liquid tank when the damping device is mounted onto the tower. In the case of a wind turbine tower, the geometric shape may for example hinder any collision with HV, LV and AUX cables that enter a top tower platform that is positioned beneath the mounted damping device.

According to an embodiment, a surface of a wall of the liquid tank facing a volume of liquid in the liquid tank comprises one or more elongated ribs. Preferably, the elongated ribs have a triangular cross section and/or a longitudinal extension of the elongated ribs is oriented in vertical direction.

According to an embodiment, the one or more ribs comprise plural ribs provided on an inner surface of the outer wall and comprise plural ribs provided on an outer surface of the inner wall. The ribs on the outer wall are preferably displaced in circumferential direction from the ribs on the inner wall.

The arrangement of the ribs may increase the damping magnitude due to an influenced flow of the liquid in the liquid tank. The ribs may for example be arranged in the tank such that a flow resistance in the tank may be increased. Further, the ribs may cause increased frictional losses due to the friction between the liquid and the tank. This is advantageous since the vibrations of the tower may be more effectively damped.

According to an embodiment, the mounting interface is configured to mount the liquid damping device onto the upper opening of the tower such that the liquid damper is arranged inside the tower.

The liquid damper being arranged inside the tower facilitates a subsequent handling of the tower during which the damping device is mounted on the tower. It may even allow displacing the tower by means of a lifting device, e.g. a crane, together with the damping device. Since it is not required to remove the damper prior to displacing the tower, the number of lifts required for handling the tower is reduced. In case of erecting an offshore wind turbine, the required time for erecting the offshore wind turbine is accordingly reduced. Moreover, the liquid damper is protected against environmental influences, e.g. the weather, inside the tower.

In an embodiment, only a single (temporary) damping device is provided in an upper half/third of the tower.

It should be clear that other permanent dampers may still be arranged inside the tower. Such permanent dampers may be tuned to damp vibrations of the tower after it is taken into operation at the operation site, e.g. during its operation of generating electrical power. Further, such permanent dampers may for example be tuned such to consider parameters of a fully erected wind turbine, e.g. a weight of such wind turbine including its rotor and/or nacelle.

In an embodiment, the damping device has a single liquid damper.

In an embodiment, the single liquid tank is the only single liquid tank arranged in upper half/third of the tower.

In an embodiment, all damping elements of the damping device may consist of the single liquid tank.

It is noted that a damping device comprising a plurality of liquid tanks each of which is tuned so as to damp a specific frequency region may not be accommodated inside the tower (especially in the case of a wind turbine tower having strongly limited free space) when the plural liquid tanks are sized so as to provide a damping magnitude great enough to damp above mentioned harmful vibrations. Contrarily, a single tank as herein described that is tuned to operate as a compromise such that said harmful frequencies are adequately damped over a wide scope still allows being sized so as to be arranged inside the tower. The herein described solution, hence, combines the above outlined advantages of tower protection and compact sizing of the damping device.

According to an embodiment, the one or more load transfer elements comprise a plurality of adjustment bolts. An adjustment bolt extends between the mounting interface and an interior of the tower.

The damping device may be supported on a flange of the tower at the upper opening of the tower or on a platform (e.g. top tower platform) arranged in the tower beneath the upper opening of the tower. The loads acting on the tower, e.g. said harmful vibrations, may accordingly be transferred to the damping device at least via a mechanically coupling due to the friction forces between the damping device and the flange or the platform. The one or more load transfer means may clamp the damping device by means of the adjustment bolts inside the tower and may hence improve the transmission of the harmful vibration from the tower to the damping device. That may improve the efficiency of the damping device and may reduce loads acting on the tower.

In an embodiment, the adjustment bolts are configured to be adjustable in length. That may ensure that the damping device is mountable on a plurality of towers comprising an upper opening with different diameters.

In an embodiment, the adjustment bolts may be configured to be adjustable by an actuator in response to a control signal, e.g. by a motor. That may accelerate the process of mounting/dismounting the damping device on the tower as it is not required to mount/dismount the damping device by hand. The control signal may for example be send (remotely) from a respective controller. Preferably, the control signal may comprise a force/torque control signal generated by a respective force/torque controller such that the adjustment bolts are adjusted in accordance with the force/torque control signal. That may ensure that the damping device is clamped inside the tower in accordance with a predetermined pressure or force.

According to an embodiment, the damping device comprises a guide system configured to center the damping device relative to the upper opening of the tower.

According to an embodiment, the guide system comprises a plurality of guiding arms, each arm extending in a vertical direction downwards and being preferably tapered at a bottom end of the arm.

In an embodiment, one or more of the plural guiding arms comprise an upper end and a lower end, the upper end being arranged vertically above the lower end, and the lower end of the one or more of the plural guiding arms is bent towards a center of the damping device.

In an embodiment, the plural guiding arms are evenly distributed in a circumferential direction around the liquid tank.

The plural guiding arms may comprise at least three guiding arms. For example, when the plural guiding arms comprise three guiding arms, the three guiding arms may preferably be distributed in 120° steps around the liquid tank.

Such guide system may allow guiding the insertion of the damping device into the upper opening of the tower. Due to the guide system, the damping device may be centered and may slide into the upper opening of the tower when the guide system touches an outer rim of the upper opening, e.g. when the damping device is lowered, e.g. by a lifting device, from above the tower. Accordingly, the mounting of the damping device on the tower may be facilitated and may be accelerated.

In an embodiment, one or more of the plural guiding arms comprises a second arm extending from the guiding arm to the liquid tank.

Such second arm increases the rigidness and/or robustness of the respective guiding arm.

In another embodiment, one or more of the plural guiding arms comprise a linear or angular joint configured such that the one or more of the plural guiding arms have a predetermined mechanical resistance or rigidness or mechanical impedance. Preferably, the predetermined mechanical resistance or stiffness or mechanical impedance is adjustable, e.g. by an adjustable spring-mass damper system comprised in the linear or angular joint. The linear or angular joint may be actuator driven, e.g. motor driven, and the mechanical resistance or mechanical impedance or rigidness may be generated by a respective impedance control.

Such softened or stiffness reduced/controlled guiding arms may be advantageous since the spontaneous load that acts on a single guiding arm when it hits the tower may be reduced and/or smoothed.

According to an embodiment, the damping device comprises a tower cover being configured to cover an upper opening of the tower. The tower cover is fixed or attached to the liquid damper. For example, the tower cover may be bolted to the liquid damper.

In an embodiment, the tower cover comprises plural strengthening ribs. Preferably the strengthening ribs are arranged on a side of the tower cover facing the liquid damper.

In an embodiment, the damping device comprises a plurality of supporting arms, the supporting arms extending radially from the liquid tank, and the supporting arms are configured to support the tower cover.

According to an embodiment, a gap between an inner wall of the tower and an outer dimension of the liquid damper is created when the damping device is mounted on the upper opening of the tower. The outer dimension of the liquid damper is configured such that the gap allows gripping means of a lifting device to grip the inner wall of the tower through two or more hatches comprised by the tower cover in order to lift the tower together with the damping device mounted on the tower.

The two or more hatches may be arranged along a circumferential region of the tower cover. The hatches may preferably be evenly distributed along the circumferential region.

The two or more hatches may be arranged at least partly over the gap and/or sized so as to allow the gripping means to grip through the two or more hatches.

In an embodiment, at least a portion of two or more hatches comprise a hatch cover and the hatch cover is opened and/or closed in response to a control signal. Preferably, the hatch cover is actuator driven, e.g. motor driven.

Such tower cover may protect the inside of the tower from environmental influences, e.g. humidity, wind, or other meteorological influences. Since the tower cover is fixed or attached to the liquid damper, the rigidity and, accordingly, the robustness of the tower cover may be increased. Further, such 'integrated' (fixed or attached) tower cover may still allow reducing the number of lifts that are required when handling the tower (e.g. displacing the tower). It may allow gripping the tower through the hatches of the cover and it, hence, may allow lifting the tower together with the damping device mounted on tower. It may neither be required to add or remove the tower cover by means of a separate lifting operation, nor may it be required to remove to damping device prior to lifting the tower. It may even allow inserting the damping device into the tower by means of the same gripping means that is used to handle the tower. Thus, such tower cover allows accelerating the handling operations related to the tower and the damping device.

In another embodiment, the damping device is configured such that it is supportable on or attachable to the gripping means that is used to handle or displace the tower.

As mentioned above, when the damping device allows being supported on the gripping means or being attached to the gripping means configured to handle or displace the tower, the damping device may be added to the tower or removed from the tower in parallel during such motions of the lifting device and the respective gripping means that is required to be performed in order to handle or displace the tower. As a result the number of lifts required for handling the tower and the damping device are reduced and time is saved.

According to an embodiment of the invention, a tower is provided. The tower comprises any of the herein described damping devices. The damping device is mounted on an upper opening of the tower such that vibrations of the tower at least at a first frequency and at a second frequency are damped during vertical storage and/or vertical transport of the tower, the second frequency being different from the first frequency

According to an embodiment of the invention, a wind turbine tower is provided. The wind turbine tower comprises any of the herein described damping devices. The damping device is mounted on an upper opening of the wind turbine tower such that vibrations of the wind turbine tower at least at a first frequency and at a second frequency are damped during vertical storage and/or vertical transport of the wind turbine tower, the second frequency being different from the first frequency.

As outlined, such damping device equipped tower or (offshore) wind turbine tower is protected against harmful vibrations, e.g. vortex induced vibrations and interference galloping induced vibrations. It is further protected against environmental influences, e.g. the weather. Moreover, it is ensured that the handling of the tower, e.g. by means of a lifting device and respective gripping means, is not compromised or complicated but facilitated.

According to an embodiment of the invention, a method of providing a damping device configured to be mountable on an upper opening of a tower and configured to provide vibration damping during vertical storage and/or vertical transport of the tower is provided. The damping device comprises a liquid damper comprising a single liquid tank. The method comprises determining one or more damping parameters of the liquid damper that are tunable to provide the vibration damping at predetermined frequencies such that the liquid damper damps vibrations at least at a first frequency and at a second frequency, the second frequency being different from the first frequency, and providing the liquid damper in accordance with the one or more determined parameters.

It should be clear that the provided damping device may be any of the herein described damping devices. It should further be clear that the method of providing the damping device may accordingly comprise any step that is required to provide the features of any of the damping devices herein described.

The step of determining the one or more damping parameters may for example be based on a software model of the damping device and the tower on which to damping device is to be mounted, and a simulation and/or optimization process by means of said software model.

In an embodiment, the method of providing the damping device may comprise tuning or setting, the one or more damping parameters such that the liquid damper damps vibrations at least at the first frequency and at the second frequency.

As mentioned above, the damping parameters may comprise at least one of the geometric shape of the liquid tank, the size of the liquid tank, the type of the liquid in the liquid tank, the volume of the liquid in the liquid tank and the weight of the liquid in the liquid tank.

In an embodiment, the method of providing the damping device may be a method of providing the damping device mounted on the tower.

In such embodiment, the method may further comprise mounting, by means of a mounting interface, the damping device on an upper opening of the tower.

In another embodiment, the method comprises vertically storing and/or transporting the tower with the damping device mounted on the tower.

According to an embodiment of the invention, a method of displacing a tower with a lifting device is provided. A damping device, preferably any of the damping devices described herein, is mounted on an upper opening of the tower. The method comprises at least one of gripping the tower, by gripper means, while the damping device is mounted on the tower, lifting the gripped tower, by the lifting device, while the damping device is mounted on the tower, moving the gripped tower to a target position while the damping device is mounted on the tower, and placing the tower at the target position while the damping device is mounted on the tower.

In an embodiment, the method further comprises removing the damping device from the tower when the gripper means returns from the placing at the destination position.

In an embodiment, the method further comprises supporting the damping device on or attaching the damping device to the gripper means that handles or displaces the tower in order to remove the damping device from the gripper, and/or to place the damping device onto the tower (before the damping device is mounted on the tower).

When the damping device is supported on or attached to the gripper means that is used to handle the tower, a gripper change may no more be required. Further, no lifting operations may be required other than those performed by the lifting device to displace the tower. Accordingly, such method may allow reducing the required lifts for displacing the tower. Thus, the time and hence the effort for handling the tower are reduced while the tower is still protected from damage due to environmental influences and especially from harmful vibrations.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing illustrating exemplarily a typical deck layout of an installation vessel and interference galloping susceptible wind directions.
Fig. 2 is a schematic drawing illustrating exemplarily an occurrence of interference galloping induced vibrations of a tower.
Fig. 3 is a schematic drawing illustrating an isometric top view of a damping device configured to provide vibration damping during vertical storage and/or vertical transport of a tower according to an embodiment.
Fig. 4 is a schematic drawing illustrating an isometric bottom view of the damping device according to the embodiment shown in figure 3.
Fig. 5 is a schematic drawing illustrating a cut view of a liquid tank of a damping device configured to provide vibration damping during vertical storage and/or vertical transport of a tower according to an embodiment.
Fig. 6 is a schematic drawing illustrating a damping device as shown in figure 3 mounted onto a tower according to an embodiment.
Fig. 7 is a schematic drawing illustrating a cut view of the damping device mounted onto the tower shown in figure 6.
Fig. 8 is a schematic drawing illustrating a focused view of a region of the damping device mounted onto the tower shown in figure 7.
Fig. 9 is a schematic drawing illustrating gripping means gripping the tower with the damping device mounted on the tower as shown in figure 6 according to an embodiment.
Fig. 10 is a schematic drawing illustrating a cut view of the gripping means gripping the tower with the damping device mounted on the tower as shown in figure 9.
Fig. 11 is a schematic drawing illustrating a handling operation of a tower together with a damping device mounted on the tower according to an embodiment.
Fig. 12 is a schematic flow diagram illustrating a method of providing a damping device configured to be mountable on an upper opening of a tower and configured to provide vibration damping during vertical storage and/or vertical transport of the tower according to an embodiment.
Fig. 13 is a schematic flow diagram illustrating a method of displacing a tower with a lifting device according to an embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

It should be clear that descriptions and explanations herein which are limited to a specific type of tower may be applied correspondingly to other types, even if such other types are not shown in the respective figure.

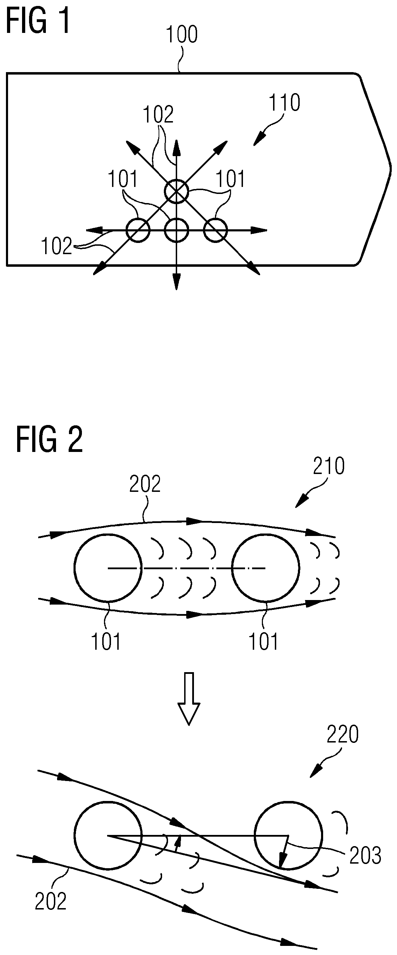

According to an embodiment, the damping device is configured to damp vortex induced vibrations and interference galloping induced vibrations of a tower. Both vortex induced vibrations and interference galloping induced vibrations are capable to damage the tower and, hence, require to be damped to avoid such damage. Interference galloping induced vibrations may for example occur when plural wind turbine towers are arranged closely positioned to each other, e.g. when the towers are arranged on an installation vessel. Figure 1 is a schematic drawing illustrating exemplarily a typical deck layout of an installation vessel 100 and interference galloping susceptible wind directions 102. Four pre-assembled offshore wind turbine towers 101 are positioned on an installation vessel 100 in group 110 such close to each other that the towers 101 have an aerodynamic influence on each other. Critical wind directions 102 that may induce interference galloping induced vibrations of the towers 101 are indicated exemplarily by the arrows and point in 45-degree steps from 0 to 360 degree.

Figure 2 is a schematic drawing illustrating exemplarily an occurrence of interference galloping induced vibrations of a tower 101. A flow of air 202 moves between two of the towers 101 that are typically tall cylindrical bodies. In figure 2 the flow of air 202 differs in a first phase 210 from the flow of air 202 in a second phase 220. In response, in the second phase 220, a force 203 is induced in the downstream tower 101 that results in a vibration of the downstream tower 102. It is noted that the aerodynamic effect of interference galloping may occur in response to different wind directions in the group 110 as shown in figure 1. The aerodynamic effect of interference galloping may occur during storage and transport of the towers 101. It is however noted that the group 110 of towers 101 is especially sensitive to interference galloping induced vibrations during the offshore sea transport on the installation vessel 110 to the installation site of the towers. Accordingly, a damping device may be mounted onto the tower in order to protect the towers 101 during transport and/or storage from damage in response to the harmful vibrations that may be vortex induced vibrations and interference galloping induced vibrations.

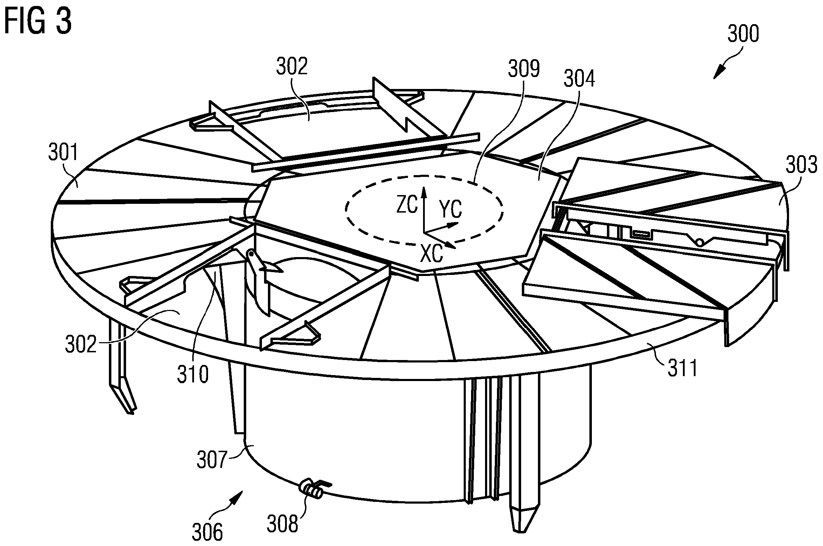

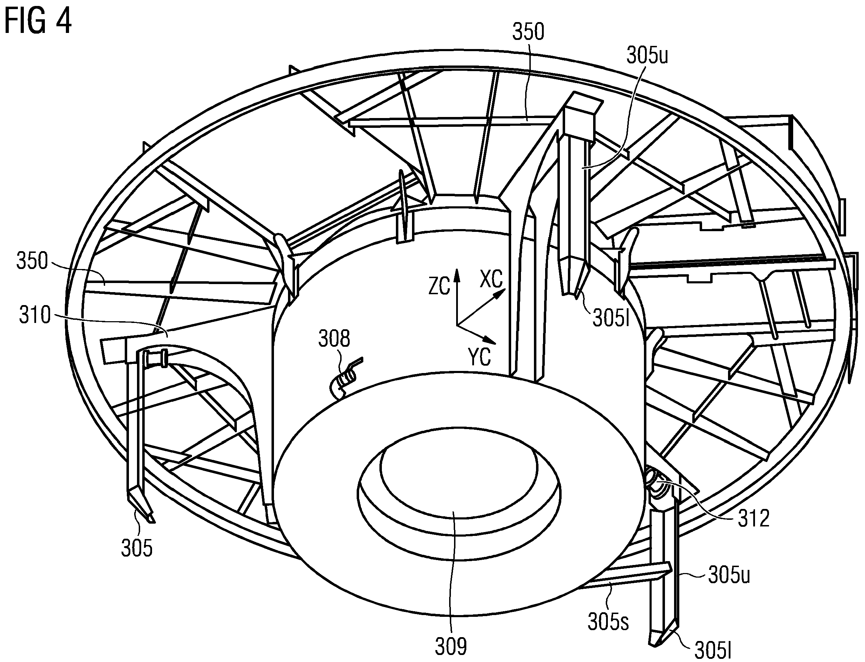

Figure 3 is a schematic drawing illustrating the damping device 300 configured to provide vibration damping during vertical storage and/or vertical transport of a tower according to an embodiment. The damping device 300 comprises a liquid damper 306 comprising a liquid tank 307. The liquid tank 307 is essentially shaped as a cylinder through which a hole 309 vertically runs from an upper side to the bottom side of the cylinder. Thus, the liquid tank 307 is essentially shaped as a hollow cylinder. In the shown example, the liquid tank 307 is shaped as a cylinder combined with a conical frustum on top of the cylinder, the combined body being run vertically by a hole. It should be clear that other geometric designs of the liquid tank 307 are however possible. In figure 3, the hole 309 is covered by a cover 304. The cover 304 may be removable at all or capable to be opened and closed. The hole 309 is indicated by a dashed line. The damping device 300 comprises further a circular tower cover 301. The tower cover 301 is an integrated top cover, i.e. it is fixed or attached to the damping device 300. It may for example be fixed or attached to the liquid tank 307, e.g. by means of bolts. The tower cover 301 is supported on supporting arms 310 to reduce a vertical load acting on the top cover 310. The tower cover 301 comprises further strengthening ribs 450 as shown in figure 4 that increase the rigidness of the tower cover 301. The tower cover 301 and the liquid tank 307 are vertically centered on each other. The tower cover 301 comprises three hatches 302 which are evenly distributed around a vertical axis zc. The vertical axis zc runs vertically through the center point of the body of damping device 300. In the shown embodiment, the hatches 302 are arranged in 120° steps around the axis zc. The axis zc is part of a coordinate system further comprising an axis yc and an axis xc. More or less of such evenly distributed hatches 302 are possible. However, the hatches 302 are arranged and sized so as not to compromise the operation of a gripper configured to handle a tower on which the damping device 300 is to be mounted. Each of the hatches 302 radially extends from an exterior of the liquid tank 307 to an outer rim 311 of the top cover. The shape of the hatches 307 is for example rectangular. Each of the hatches 307 comprises a cover 303 to open and close the respective hatch or, alternatively, a cover 303 that is removable at all. The cover 303 may for example be but is not limited to a sliding cover as shown in the embodiment. The sliding cover 303 comprises two parts each of which is configured to allow sliding the respective part sideward. When both parts of the cover 303 are slide sideward in a direction pointing away from the respective hatch, the hatch 302 is opened and, vice versa, the hatch 302 is closed. At least one of the covers 303 covering the hatches 302 and the cover 304 may be opened/closed automatically, e.g. motor driven in response to a respective control signal. For example, the hatches 302 may be opened in response to a control signal that is generated due to a presence of a gripper or any other tool that requires the hatches 302 and/or the cover 304 to be in a specific one of both the opened and closed state.

Figure 4 is a schematic drawing illustrating an isometric bottom view of the damping device 300 shown in figure 3. The damping device 300 comprises a guiding system comprising three guiding arms 305 which are evenly distributed around the vertical axis zc. In the shown embodiment, the guiding arms 305 are arranged in 120-degree steps around the vertical axis zc. In other embodiments, the number of the guiding arms 305 may differ. The guide system is configured to guide the insertion of the damping device into the upper opening of the tower. Due to the guide system, the damping device is centered and slides into the upper opening of the tower when the guide system touches an outer rim of the upper opening. For that purpose the guiding arms 305 are tapered and a lower end 305l thereof is bent towards the liquid tank 307. A guiding arm 305 comprises further a second arm 305s that extends from an upper end 305u of the guiding arm 305 to the liquid tank 307. The damping device 300 further comprises load transfer elements 312, e.g. threaded extrusion rods, that are extrudable in order to clamp the damping device 300 in the upper opening of the tower 101. The liquid tank 307 comprises further a liquid interface 308 by means of which the liquid tank 307 may be drained or filled with a liquid.

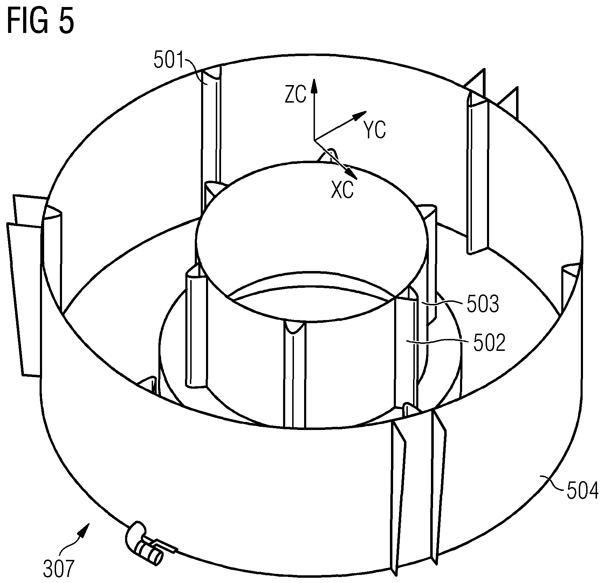

Figure 5 is a schematic drawing illustrating a cut view of the liquid tank 307 of the damping device 300 according to an embodiment. The damping characteristics of the liquid damper 306 (slosh damper) may be tuned by several damping parameters related to the liquid tank 307 (slosh tank). Those are for example: a geometric shape of the liquid tank 307, a size of the liquid tank 307, a type of a liquid in the liquid tank, a volume of the liquid in the liquid tank 307 and a weight of the liquid in the liquid tank 307. In figure 5, the geometric shape is basically a hollow cylinder and comprises ribs 501 that are circumferentially arranged and evenly distributed on an outer wall 504 of the cylinder and ribs 502 that are circumferentially arranged and evenly distributed on an inner wall 503 of the cylinder. The plural ribs 501 and the plural ribs 502 are displaced to each other. The ribs 501 and 502 have an influence on the sloshing of the liquid in the liquid tank 307 thereby improving the damping of the liquid tank 307. The damping device 300 is tuned by means of the damping parameters so as to damp harmful vibrations that may occur at least at a first and second frequency, e.g. vortex induced vibrations and interference galloping induced vibrations. In order to achieve a high or even maximum damping magnitude at the critical frequencies an optimized configuration and/or combination of the damping parameters is determined and the damping device 306 is provided in accordance with the determined damping parameters. That may be achieved by means of simulations and software models, e.g. software model of the damping device 300 and the tower 101, based on which the optimized configuration and/or combination may be derived.

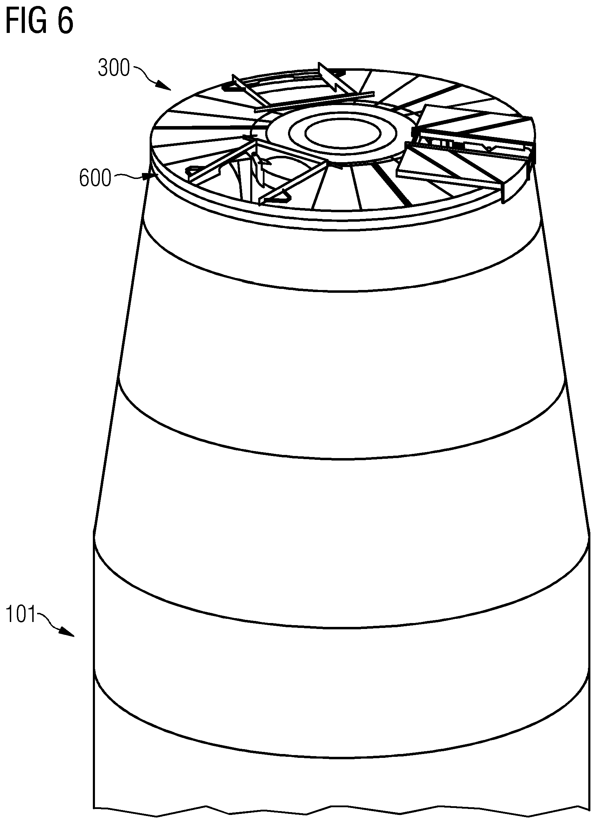

Figure 6 is a schematic drawing illustrating a damping device 300 as shown in figure 3 mounted onto a tower 101 according to an embodiment. The damping device 300 is mounted on an upper opening 600 of the tower.

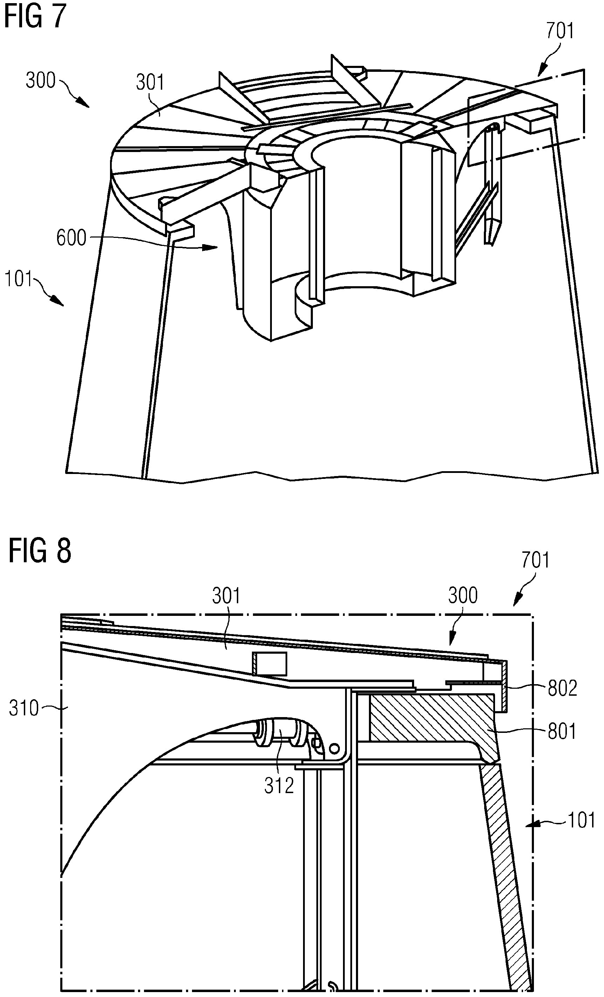

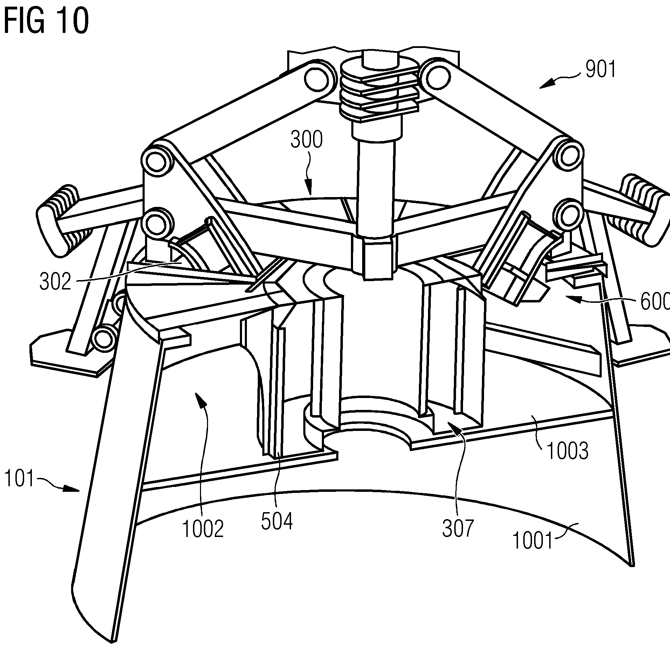

Figure 7 is a schematic drawing illustrating a cut view of the damping device 300 mounted onto the tower 101 shown in figure 6. In an embodiment the damping device 300 is supported on the outer rim of the upper opening 600 of the tower 101. In other embodiments the damping device 300 may however be supported on a plane or platform 1003 inside the tower 101, e.g. on a top tower platform as shown in figure 10 in case of a wind turbine. It is noted that the plane 1003 is blanked out in figure 7 and must be added in mind. When the damping device 300 is supported on the plane 1003, the load is taken away from the top cover 301 since the top cover 301 is not supported on the outer rim of the upper opening 600 anymore. This is illustrated in region 701.

Figure 8 is a schematic drawing illustrating a focused view of the region 701 of the damping device 300 mounted onto the tower 101 as shown in figure 7. It can be seen that the top cover 301 is not in contact with the outer rim or flange 801 of the tower 101 and, hence, is not supported on the outer rim or flange 801. An outer rim 802 of the top cover 301 extends over a collar of the tower flange 801 to avoid water protruding into the tower. When the load transfer elements (adjustment bolts) 312, being for example threaded extrusion rods, are extruded, a lateral force is induced onto the flange 801 from each supporting arm 310 of the damping device that comprises such load transfer element 312.

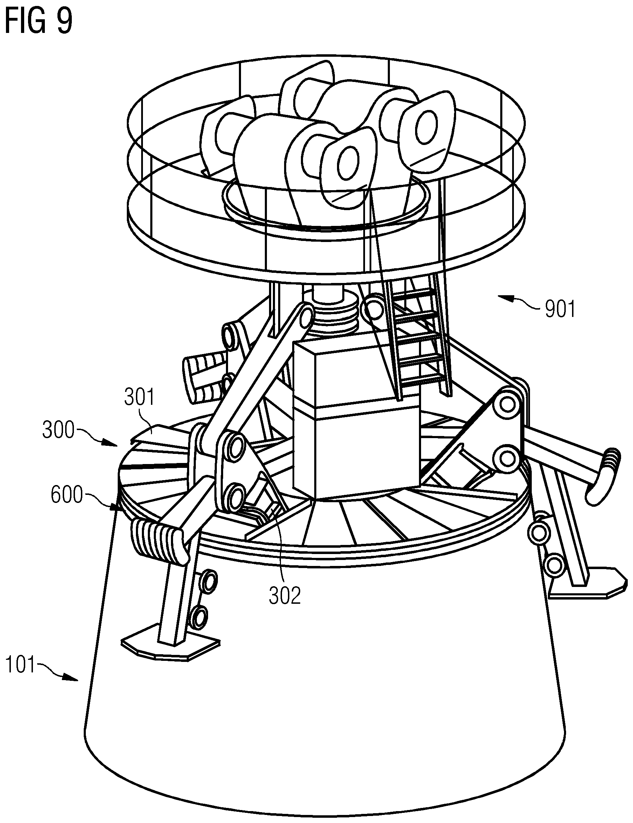

Figure 9 is a schematic drawing illustrating gripping means 901 gripping the tower 101 with the damping device 300 mounted on the tower 101 as shown in figure 6 according to an embodiment. The damping device 300 is mounted on the upper opening 600 of the tower 101 and the gripper means 901 grips the tower 101 through the hatches 302 of the top cover 301. The gripper means 901 may be a gripper that is used with a lifting device, e.g. a crane, to displace or handle a pre-assembled (offshore) wind turbine tower.

Figure 10 is a schematic drawing illustrating a cut view of the gripping means 901 gripping the tower 101 with the damping device 300 mounted on the tower 101 as shown in figure 9. The gripping means 901 enter a gap 1002 through the hatches 302 and the gap 1002 is created between an inner wall 1001 of the tower 101 and the outer wall 504 of the liquid tank 307. The gap 1002 allows the gripping means 1002 to reach and grip the inner wall 1001 of tower 101 in order to lift the tower together with the damping device 300.

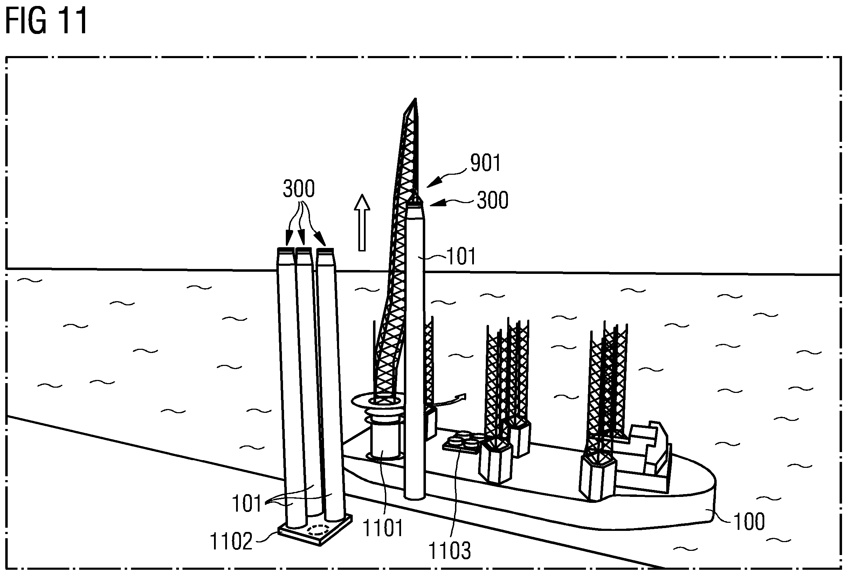

Figure 11 is a schematic drawing illustrating a handling operation of a tower 101 together with a damping device 300 mounted on the tower according to an embodiment. Three pre-assembled offshore wind turbine towers 101 are arranged on an onshore tower storage 1102. A fourth preassembled offshore wind turbine tower 101 is transported by a lifting device 1101 with gripping means 901 to an installation vessel tower storage 1103 on the installation vessel 100. A damping device 300 is mounted on each of the preassembled towers 101. The lifting device 1101 is able to lift and displace the tower 101 with the damping device 300 mounted on the tower 101 with the gripping means 901 gripping the tower 101 as described with respect to the figures 9 and 10. As a result no lifting operations, e.g. a separate lifting of the damping device 300, are required other than those performed by the lifting device 1101 in order to displace the tower 101. It may even be unnecessary to use different type of grippers. For example, the damping device 300 may be picked from a first position (e.g. from a damping device storage (not shown)) by means of the gripping means 901, e.g. the gripping means 901 may lift the damping device 300 by means of slings attached to sling attachments at designated lifting points within the hatches 302. In a special embodiment, the damping device 300 may be supported on the gripping means 901. The damping device 300 may then be placed onto or inserted into the tower 101 at a second position (e.g. at the onshore tower storage 1102), where the damping device 300 is also mounted on the tower 101. Then, the tower 101 with the mounted damping device 300 may be picked by means of the gripping means 901 and placed at a third position (e.g. on the installation vessel tower storage 1103). Then, the tower 101 with the mounted damping device 303 may be placed, by gripping the tower 101 with gripping means 901, at a fourth position (e.g. on a tower installation foundation at an offshore installation site (not shown)). When the tower 101 is placed at the fourth position, the gripping means 901 may be released, i.e. (partly) opened, and the damping device 300 may be dismounted. Then, the damping device 300 may be attached again to the released gripping means 901 and be removed from the tower 101 when the gripping means 901 is returned by the lifting device 1101 from the fourth position.

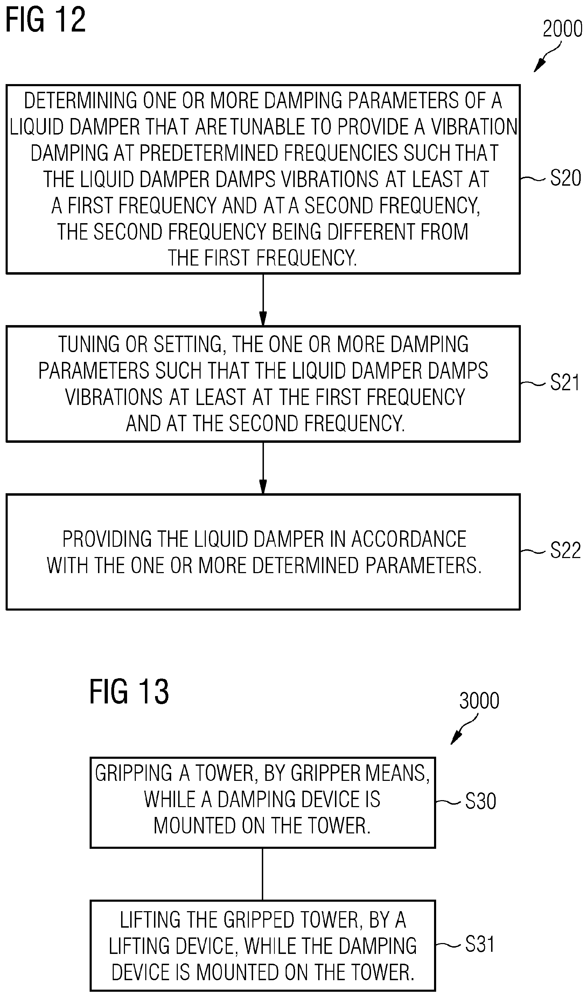

Figure 12 is a schematic flow diagram illustrating a method 2000 of providing a damping device configured to be mountable on an upper opening of a tower and configured to provide vibration damping during vertical storage and/or vertical transport of the tower according to an embodiment. The damping device comprises a liquid damper comprising a single liquid tank. The method 2000 comprises according to a step S20 determining one or more damping parameters of the liquid damper that are tunable to provide the vibration damping at predetermined frequencies such that the liquid damper damps vibrations at least at a first frequency and at a second frequency, the second frequency being different from the first frequency. According to a step S21, the method 2000 comprises tuning or setting, the one or more damping parameters such that the liquid damper damps vibrations at least at the first frequency and at the second frequency. According to a step S22, the method 2000 comprises providing the liquid damper in accordance with the one or more determined parameters.

Figure 13 is a schematic flow diagram illustrating a method 3000 of displacing a tower with a lifting device according to an embodiment. According to a step S30, the method 3000 comprises gripping the tower, by gripper means, while the damping device is mounted on the tower. According to a step S31, the method comprises lifting the gripped tower, by the lifting device, while the damping device is mounted on the tower,

It should be clear that the sequence of the method steps in figure 12 and figure 13 is not limited to the shown sequence. The methods are further not limited to the shown number of steps. Certain steps of the methods may not be carried out, may be replaced, or extended.

While specific embodiments are disclosed herein, various changes and modifications can be made without departing from the scope of the invention. The present embodiments are to be considered in all respects as illustrative and non-restrictive.

## Claims

1. A damping device configured to be mountable on an upper opening (600) of a tower (101) and configured to provide vibration damping during vertical storage and/or vertical transport of the tower, wherein the damping device comprises
a liquid damper (306) comprising a single liquid tank (307),
a mounting interface configured to mount the liquid damper on the upper opening of the tower, wherein the mounting interface comprises one or more load transfer elements (312) configured to transfer vibrations between the tower and the liquid damper,
wherein the liquid damper is configured to provide the vibration damping at predetermined frequencies tunable by one or more damping parameters of the liquid damper, and
**characterized in that**
the one or more damping parameters are configured such that the liquid damper damps vibrations at least at a first frequency and at a second frequency, the second frequency being different from the first frequency.

2. The damping device of claim 1, wherein the vibrations at the first frequency correspond to vortex induced vibrations of the tower and/or wherein the vibrations at the second frequency correspond to interference galloping induced vibrations of the tower.

3. The damping device of any of claims 1 or 2, wherein the damping parameters comprise at least one of a geometric shape of the liquid tank (307), a size of the liquid tank, a type of a liquid in the liquid tank, a volume of the liquid in the liquid tank and a weight of the liquid in the liquid tank.

4. The damping device of any of the preceding claims, wherein the liquid tank (307) is a volume comprising a vertical through hole (309), wherein the volume comprises an inner wall (503) enclosing the through hole and an outer wall (504) enclosing the inner wall, and wherein the volume is defined between the inner wall and the outer wall, wherein preferably at least one of the inner wall and the outer wall is cylindrical.

5. The damping device of any of the preceding claims, wherein a surface of a wall (503, 504) of the liquid tank (307) facing a volume of liquid in the liquid tank comprises one or more elongated ribs (501, 502), wherein preferably, the elongated ribs have a triangular cross section, and/or wherein a longitudinal extension of the elongated ribs is oriented in vertical direction.

6. The damping device of claims 4 and 5, wherein the one or more ribs (501, 502) comprise plural ribs (501) provided on an inner surface of the outer wall (504) and comprise plural ribs (502) provided on an outer surface of the inner wall (503), wherein the ribs on the outer wall are preferably displaced in circumferential direction from the ribs on the inner wall.

7. The damping device of any of the preceding claims, wherein the mounting interface is configured to mount the liquid damping device onto the upper opening (600) of the tower (101) such that the liquid damper is arranged inside the tower.

8. The damping device of any of the preceding claims, wherein the one or more load transfer elements (312) comprise a plurality of adjustment bolts, wherein an adjustment bolt extends between the mounting interface and an interior of the tower.

9. The damping device of any of the preceding claims, wherein the damping device comprises a guide system configured to center the damping device relative to the upper opening (600) of the tower (101).

10. The damping device of claim 9, wherein the guide system comprises a plurality of guiding arms (305), each arm extending in a vertical direction downwards and being preferably tapered at a bottom end of the arm.

11. The damping device of any of the preceding claims, wherein the damping device comprises a tower cover (301) being configured to cover an upper opening (600) of the tower (101), wherein the tower cover is fixed or attached to the liquid damper (306).

12. The damping device of claim 11, wherein the damping device is configured such that a gap (1002) between an inner wall (1001) of the tower (101) and an outer dimension of the liquid damper (306) is created when the damping device is mounted on the upper opening (600) of the tower, and
wherein the outer dimension of the liquid damper is configured such that the gap allows gripping means (901) of a lifting device (1101) to grip the inner wall of the tower through two or more hatches (302) comprised by the tower cover (301) in order to lift the tower together with the damping device mounted on the tower.

13. A wind turbine tower, wherein the wind turbine tower comprises
a damping device (300) according to any of the preceding claims, wherein the damping device is mounted on an upper opening (600) of the wind turbine tower such that vibrations of the wind turbine tower at least at a first frequency and at a second frequency are damped during vertical storage and/or vertical transport of the wind turbine tower, the second frequency being different from the first frequency.

14. A method (2000) of providing a damping device configured to be mountable on an upper opening of a tower and configured to provide vibration damping during vertical storage and/or vertical transport of the tower, wherein the damping device comprises a liquid damper comprising a single liquid tank, wherein the method comprises
determining (S20) one or more damping parameters of the liquid damper that are tunable to provide the vibration damping at predetermined frequencies such that the liquid damper damps vibrations at least at a first frequency and at a second frequency, the second frequency being different from the first frequency, and
providing (S22) the liquid damper in accordance with the one or more determined parameters.

15. A method of displacing a tower with a lifting device,
wherein a damping device according to any of claims 1-12 is mounted on an upper opening of the tower, and wherein the method comprises at least one of
gripping the tower (S30), by gripper means, while the damping device is mounted on the tower
lifting the gripped tower (S31), by the lifting device, while the damping device is mounted on the tower,
moving the gripped tower to a target position while the damping device is mounted on the tower, and
placing the gripped tower at the target position while the damping device is mounted on the tower,
wherein a wall of the tower is gripped by the gripper means.

## Patentansprüche

1. Dämpfungsvorrichtung, die dazu ausgelegt ist, an einer oberen Öffnung (600) eines Turms (101) montierbar zu sein, und dazu ausgelegt ist, eine Schwingungsdämpfung während einer vertikalen Lagerung und/oder eines vertikalen Transports des Turms bereitzustellen, wobei die Dämpfungsvorrichtung Folgendes umfasst
einen Flüssigkeitsdämpfer (306), der einen einzelnen Flüssigkeitstank (307) umfasst,
eine Montageschnittstelle, die dazu ausgelegt ist, den Flüssigkeitsdämpfer an der oberen Öffnung des Turms zu montieren, wobei die Montageschnittstelle ein oder mehrere Lastübertragungselemente (312) umfasst, die dazu ausgelegt sind, Schwingungen zwischen dem Turm und dem Flüssigkeitsdämpfer zu übertragen,
wobei der Flüssigkeitsdämpfer dazu ausgelegt ist, die Schwingungsdämpfung bei vorbestimmten Frequenzen bereitzustellen, die durch einen oder mehrere Dämpfungsparameter des Flüssigkeitsdämpfers abstimmbar sind, und
**dadurch gekennzeichnet, dass**
der eine oder die mehreren Dämpfungsparameter so ausgelegt sind, dass der Flüssigkeitsdämpfer Schwingungen zumindest bei einer ersten Frequenz und bei einer zweiten Frequenz dämpft, wobei sich die zweite Frequenz von der ersten Frequenz unterscheidet.

2. Dämpfungsvorrichtung nach Anspruch 1, wobei die Schwingungen bei der ersten Frequenz wirbelinduzierten Schwingungen des Turms entsprechen und/oder wobei die Schwingungen bei der zweiten Frequenz durch Interferenzgalloping induzierten Schwingungen des Turms entsprechen.

3. Dämpfungsvorrichtung nach einem der Ansprüche 1 oder 2, wobei die Dämpfungsparameter eine geometrische Form des Flüssigkeitstanks (307), eine Größe des Flüssigkeitstanks, eine Art einer Flüssigkeit in dem Flüssigkeitstank, ein Volumen der Flüssigkeit in dem Flüssigkeitstank und/oder ein Gewicht der Flüssigkeit in dem Flüssigkeitstank umfassen.

4. Dämpfungsvorrichtung nach einem der vorhergehenden Ansprüche, wobei der Flüssigkeitstank (307) ein Volumen ist, das ein vertikales Durchgangsloch (309) umfasst, wobei das Volumen eine Innenwand (503), die das Durchgangsloch umschließt, und eine Außenwand (504), die die Innenwand umschließt, umfasst, und wobei das Volumen zwischen der Innenwand und der Außenwand definiert ist, wobei vorzugsweise die Innenwand und/oder die Außenwand zylindrisch ist.

5. Dämpfungsvorrichtung nach einem der vorhergehenden Ansprüche, wobei eine Oberfläche einer Wand (503, 504) des Flüssigkeitstanks (307), die einem Flüssigkeitsvolumen in dem Flüssigkeitstank zugewandt ist, eine oder mehrere längliche Rippen (501, 502) umfasst, wobei vorzugsweise die länglichen Rippen einen dreieckigen Querschnitt aufweisen, und/oder wobei eine Längserstreckung der länglichen Rippen in vertikaler Richtung ausgerichtet ist.

6. Dämpfungsvorrichtung nach Anspruch 4 und 5, wobei die eine oder die mehreren Rippen (501, 502) mehrere Rippen (501) umfassen, die an einer Innenfläche der Außenwand (504) bereitgestellt sind, und mehrere Rippen (502) umfassen, die an einer Außenfläche der Innenwand (503) bereitgestellt sind, wobei die Rippen an der Außenwand vorzugsweise in Umfangsrichtung von den Rippen an der Innenwand versetzt sind.

7. Dämpfungsvorrichtung nach einem der vorhergehenden Ansprüche, wobei die Montageschnittstelle dazu ausgelegt ist, die Flüssigkeitsdämpfungsvorrichtung auf der oberen Öffnung (600) des Turms (101) so zu montieren, dass der Flüssigkeitsdämpfer innerhalb des Turms angeordnet ist.

8. Dämpfungsvorrichtung nach einem der vorhergehenden Ansprüche, wobei das eine oder die mehreren Lastübertragungselemente (312) mehrere Einstellschrauben umfassen, wobei sich eine Einstellschraube zwischen der Montageschnittstelle und einem Inneren des Turms erstreckt.

9. Dämpfungsvorrichtung nach einem der vorhergehenden Ansprüche, wobei die Dämpfungsvorrichtung ein Führungssystem umfasst, das dazu ausgelegt ist, die Dämpfungsvorrichtung relativ zur oberen Öffnung (600) des Turms (101) zu zentrieren.

10. Dämpfungsvorrichtung nach Anspruch 9, wobei das Führungssystem mehrere Führungsarme (305) umfasst, wobei sich jeder Arm in einer vertikalen Richtung nach unten erstreckt und vorzugsweise an einem unteren Ende des Arms verjüngt ist.

11. Dämpfungsvorrichtung nach einem der vorhergehenden Ansprüche, wobei die Dämpfungsvorrichtung eine Turmabdeckung (301) umfasst, die dazu ausgelegt ist, eine obere Öffnung (600) des Turms (101) abzudecken, wobei die Turmabdeckung an dem Flüssigkeitsdämpfer (306) befestigt oder angebracht ist.

12. Dämpfungsvorrichtung nach Anspruch 11, wobei die Dämpfungsvorrichtung so ausgelegt ist, dass ein Spalt (1002) zwischen einer Innenwand (1001) des Turms (101) und einer Außenabmessung des Flüssigkeitsdämpfers (306) entsteht, wenn die Dämpfungsvorrichtung an der oberen Öffnung (600) des Turms montiert ist, und
wobei die Außenabmessung des Flüssigkeitsdämpfers so ausgelegt ist, dass der Spalt Greifmitteln (901) einer Hebevorrichtung (1101) ermöglicht, die Innenwand des Turms durch zwei oder mehr in der Turmabdeckung (301) enthaltene Luken (302) zu greifen, um den Turm zusammen mit der am Turm montierten Dämpfungsvorrichtung anzuheben.

13. Windenergieanlagenturm, wobei der Windenergieanlagenturm Folgendes umfasst
eine Dämpfungsvorrichtung (300) nach einem der vorhergehenden Ansprüche, wobei die Dämpfungsvorrichtung an einer oberen Öffnung (600) des Windenergieanlagenturms so montiert ist, dass während einer vertikalen Lagerung und/oder eines vertikalen Transports des Windenergieanlagenturms Schwingungen des Windenergieanlagenturms zumindest bei einer ersten Frequenz und bei einer zweiten Frequenz gedämpft werden, wobei sich die zweite Frequenz von der ersten Frequenz unterscheidet.

14. Verfahren (2000) zum Bereitstellen einer Dämpfungsvorrichtung, die dazu ausgelegt ist, an einer oberen Öffnung eines Turms montierbar zu sein, und dazu ausgelegt ist, eine Schwingungsdämpfung während einer vertikalen Lagerung und/oder eines vertikalen Transports des Turms bereitzustellen, wobei die Dämpfungsvorrichtung einen Flüssigkeitsdämpfer umfasst, der einen einzelnen Flüssigkeitstank umfasst, wobei das Verfahren Folgendes umfasst
Bestimmen (S20) eines oder mehrerer Dämpfungsparameter des Flüssigkeitsdämpfers, die abstimmbar sind, um die Schwingungsdämpfung bei vorbestimmten Frequenzen bereitzustellen, so dass der Flüssigkeitsdämpfer Schwingungen zumindest bei einer ersten Frequenz und bei einer zweiten Frequenz dämpft, wobei sich die zweite Frequenz von der ersten Frequenz unterscheidet, und
Bereitstellen (S22) des Flüssigkeitsdämpfers gemäß dem einen oder den mehreren bestimmten Parametern.

15. Verfahren zum Verschieben eines Turms mit einer Hebevorrichtung, wobei eine Dämpfungsvorrichtung nach einem der Ansprüche 1-12 an einer oberen Öffnung des Turms montiert wird, und wobei das Verfahren mindestens eines von Folgendem umfasst Greifen des Turms (S30) durch Greifmittel, während die Dämpfungsvorrichtung am Turm montiert ist
Anheben des ergriffenen Turms (S31) durch die Hebevorrichtung, während die Dämpfungsvorrichtung am Turm montiert ist,
Bewegen des ergriffenen Turms in eine Zielposition, während die Dämpfungsvorrichtung am Turm montiert ist, und
Positionieren des ergriffenen Turms an der Zielposition, während die Dämpfungsvorrichtung am Turm montiert ist,
wobei eine Wand des Turms von den Greifmitteln ergriffen wird.

## Revendications

1. Dispositif amortisseur configuré pour pouvoir être monté sur une ouverture supérieure (600) d'une tour (101) et configuré pour assurer un amortissement de vibrations pendant un stockage vertical et/ou un transport vertical de la tour, dans lequel le dispositif amortisseur comprend
un amortisseur liquide (306) comprenant un seul réservoir de liquide (307),
une interface de montage configurée pour monter l'amortisseur liquide sur l'ouverture supérieure de la tour, dans lequel l'interface de montage comprend un ou plusieurs élément(s) de transfert de charge (312) configuré(s) pour transférer des vibrations entre la tour et l'amortisseur liquide,
dans lequel l'amortisseur liquide est configuré pour assurer l'amortissement de vibrations à des fréquences prédéterminées réglables par un ou plusieurs paramètre(s) d'amortissement de l'amortisseur liquide, et
**caractérisé en ce que** le ou les paramètre(s) d'amortissement est/sont configuré(s) de telle sorte que l'amortisseur liquide amortit les vibrations au moins à une première fréquence et à une deuxième fréquence, la deuxième fréquence étant différente de la première fréquence.

2. Dispositif amortisseur selon la revendication 1, dans lequel les vibrations à la première fréquence correspondent à des vibrations induites par vortex de la tour et/ou dans lequel les vibrations à la deuxième fréquence correspondent à des vibrations induites par galop d'interférence de la tour.

3. Dispositif amortisseur selon l'une des revendications 1 ou 2, dans lequel les paramètres d'amortissement comprennent au moins l'une parmi une forme géométrique du réservoir de liquide (307), une taille du réservoir de liquide, un type d'un liquide dans le réservoir de liquide, un volume du liquide dans le réservoir de liquide et un poids du liquide dans le réservoir de liquide.

4. Dispositif amortisseur selon l'une des revendications précédentes, dans lequel le réservoir de liquide (307) est un volume comprenant un trou traversant vertical (309), dans lequel le volume comprend une paroi interne (503) entourant le trou traversant et une paroi externe (504) entourant la paroi interne, et dans lequel le volume est défini entre la paroi interne et la paroi externe, dans lequel, de préférence, au moins l'une parmi la paroi interne et la paroi externe est cylindrique.

5. Dispositif amortisseur selon l'une des revendications précédentes, dans lequel une surface d'une paroi (503, 504) du réservoir de liquide (307) faisant face à un volume de liquide dans le réservoir de liquide comprend une ou plusieurs nervures allongées (501, 502), dans lequel, de préférence, les nervures allongées présentent une section transversale triangulaire, et/ou dans lequel une extension longitudinale des nervures allongées est orientée dans la direction verticale.

6. Dispositif amortisseur selon les revendications 4 et 5, dans lequel la ou les nervure(s) (501, 502) comprend/comprennent plusieurs nervures (501) aménagées sur une surface interne de la paroi externe (504) et comprend/comprennent plusieurs nervures (502) aménagées sur une surface externe de la paroi interne (503), dans lequel les nervures sur la paroi externe sont de préférence déplacées dans la direction circonférentielle par rapport aux nervures sur la paroi interne.

7. Dispositif amortisseur selon l'une des revendications précédentes, dans lequel l'interface de montage est configurée pour monter le dispositif amortisseur liquide sur l'ouverture supérieure (600) de la tour (101) de telle sorte que l'amortisseur liquide soit disposé à l'intérieur de la tour.

8. Dispositif amortisseur selon l'une des revendications précédentes, dans lequel le ou les élément(s) de transfert de charge (312) comprend/comprennent une pluralité de boulons de réglage, dans lequel un boulon de réglage s'étend entre l'interface de montage et un intérieur de la tour.

9. Dispositif amortisseur selon l'une des revendications précédentes, dans lequel le dispositif amortisseur comprend un système de guidage configuré pour centrer le dispositif amortisseur par rapport à l'ouverture supérieure (600) de la tour (101).

10. Dispositif amortisseur selon la revendication 9, dans lequel le système de guidage comprend une pluralité de bras de guidage (305), chaque bras s'étendant dans une direction verticale vers le bas et étant de préférence effilé au niveau d'une extrémité inférieure du bras.

11. Dispositif amortisseur selon l'une des revendications précédentes, dans lequel le dispositif amortisseur comprend un couvercle de tour (301) configuré pour couvrir une ouverture supérieure (600) de la tour (101), dans lequel le couvercle de tour est fixé ou attaché à l'amortisseur liquide (306).

12. Dispositif amortisseur selon la revendication 11, dans lequel le dispositif amortisseur est configuré de telle sorte qu'un espace (1002) entre une paroi interne (1001) de la tour (101) et une dimension externe de l'amortisseur liquide (306) est créé lorsque le dispositif amortisseur est monté sur l'ouverture supérieure (600) de la tour, et
dans lequel la dimension externe de l'amortisseur liquide est configurée de telle sorte que l'espace permet à des moyens de préhension (901) d'un dispositif de levage (1101) de saisir la paroi interne de la tour à travers deux ou plusieurs trappes (302) que le couvercle de tour (301) comprend afin de soulever la tour conjointement avec le dispositif amortisseur monté sur la tour.

13. Tour d'éolienne, dans laquelle la tour d'éolienne comprend
un dispositif amortisseur (300) selon l'une des revendications précédentes, dans lequel le dispositif amortisseur est monté sur une ouverture supérieure (600) de la tour d'éolienne de telle sorte que les vibrations de la tour d'éolienne au moins à une première fréquence et à une deuxième fréquence soient amorties pendant le stockage vertical et/ou le transport vertical de la tour d'éolienne, la deuxième fréquence étant différente de la première fréquence.

14. Procédé (2000) de fourniture d'un dispositif amortisseur configuré pour pouvoir être monté sur une ouverture supérieure d'une tour et configuré pour assurer un amortissement de vibrations pendant un stockage vertical et/ou un transport vertical de la tour, dans lequel le dispositif amortisseur comprend un amortisseur liquide comprenant un seul réservoir de liquide, dans lequel le procédé comprend les étapes consistant à
déterminer (S20) un ou plusieurs paramètre(s) d'amortissement de l'amortisseur liquide qui est/sont réglable(s) pour assurer l'amortissement de vibrations à des fréquences prédéterminées de telle sorte que l'amortisseur liquide amortit les vibrations au moins à une première fréquence et à une deuxième fréquence, la deuxième fréquence étant différente de la première fréquence, et
fournir (S22) l'amortisseur liquide en fonction du ou des paramètre(s) déterminé(s).

15. Procédé de déplacement d'une tour avec un dispositif de levage, dans lequel un dispositif amortisseur selon l'une des revendications 1 à 12 est monté sur une ouverture supérieure de la tour, et dans lequel le procédé comprend au moins l'une parmi les étapes consistant à
saisir la tour (S30), par des moyens de préhension, alors que le dispositif amortisseur est monté sur la tour,
soulever la tour saisie (S31), par le dispositif de levage, alors que le dispositif amortisseur est monté sur la tour,
déplacer la tour saisie vers une position cible, alors que le dispositif amortisseur est monté sur la tour, et
placer la tour saisie à la position cible, alors que le dispositif amortisseur est monté sur la tour,
dans lequel une paroi de la tour est saisie par les moyens de préhension.
